# EUROPÄISCHE PATENTSCHRIFT

(11) **EP 2 812 622 B1**
(45) Veröffentlichungstag und Bekanntmachung des Hinweises auf die Patenterteilung: **15.08.2018**
(21) Anmeldenummer: 13703033.4
(22) Anmeldetag: 05.02.2013
(51) Int. Cl.: F16M 11/10, F16C 11/10, F16M 11/14

(54) **STATIVKOPF**
TRIPOD HEAD
TÊTE DE SUPPORT

(30) Priorität: 08.02.2012 DE 102012101007
(43) Veröffentlichungstag der Anmeldung: 17.12.2014
(73) Patentinhaber: Vogt, Philippe, 70190 Bussieres (FR)
(72) Erfinder: Vogt, Philippe, 70190 Bussieres (FR)
(74) Vertreter: Moser Götze & Partner Patentanwälte mbB
(86) Internationale Anmeldenummer: PCT/EP2013/052228
(87) Internationale Veröffentlichungsnummer: WO 2013/117538

(56) Entgegenhaltungen:
- EP-A1- 0 349 948
- CA-A- 480 852
- DE-U1-202005 009 400

## Beschreibung

Die Erfindung betrifft einen Stativkopf zur Aufnahme eines optischen Gerätes mit einem zylinderförmigen Gehäuse, das an einem Ende eine Anschlusseinrichtung für ein Stativ aufweist, und mit einem ebenensymmetrischen Körper, der im Gehäuse schwenkbar angeordnet ist, sowie mit einer Feststelleinrichtung, um den ebenensymmetrischen Körper festzuklemmen.

Aus der EP 1 473 510 A1 ist ein Stativkopf enthaltend ein zylindrisches Gehäuse bekannt, das an einem Ende ein Anschlussmittel für ein Stativ aufweist. Es enthält eine Gelenkkugel, die drehbar und schwenkbar im Gehäuse gelagert ist, einen Aufnahmeteil für die Gelenkkugel und eine Einrichtung zum Feststellen der Gelenkkugel mit mindestens einem Feststellorgan und mit einer Stellschraube, welche Einrichtung zur Erzielung einer Klemmwirkung die Gelenkkugel gegen das Gehäuse drückt. Der Aufnahmeteil ist ein Lagerelement mit einer am Umfang der Gelenkkugel anliegende Gleitfläche, das im Gehäuse axial verschiebbar und drehbar angeordnet ist. Die Einrichtung zum Feststellen der Gelenkkugel weist ein Auflager für das Lagerelement und mit dem Auflager in Wirkverbindung stehende Mittel auf, um das Lagerelement zur Erzielung der Klemmwirkung gegen die Gelenkkugel verschieben.

Diese Art von Stativköpfen hat sich durch die gute und genau Verstellbarkeit bewährt und erlaubt die Aufnahme bzw. das Halten großer Kräfte bzw. schwerer Kamera etc.

Allerdings gibt es Situationen, in denen weitere Verstellmöglichkeiten gewünscht sind, wobei eine Grundeinstellung erhalten bleibt.

Aus der EP 0 349 948 A1 ist dagegen Stativkopf zur Aufnahme eines optischen Gerätes mit einem zylinderförmigen Gehäuse bekannt, das an einem Ende eine Anschlusseinrichtung für ein Stativ aufweist und mit einem ebenensymmetrischen Körper, der im Gehäuse beweglich angeordnet ist, und mit einer Feststelleinrichtung, um den Körper festzuklemmen, ausgestaltet ist. Die Feststelleinrichtung weist mindestens zwei mit jeweils einer Schrägfläche versehene Organe auf, die auf einer ortsfesten Unterlage abgestützt, mit den Schrägflächen aufeinanderliegend und quer zueinander verschiebbar angeordnet sind, um das eine Organ zur Erzielung der Klemmwirkung gegen den Körper zu verschieben. Eine Stelleinrichtung, die mit dem anderen Organ im Eingriff steht, um das andere Organ zum erstgenannten Organ quer zu verschieben, ist ebenfalls vorhanden.

Dabei sind gemäß einer Ausführungsform der erste und zweite Körper rechtwinklig zueinander und quer zur Gehäuseachse schwenkbar angeordnet, wobei mindestens ein Körper einen Anschlussabschnitt für das optische Gerät aufweist, und dass dem zweiten Körper eine weitere Feststelleinrichtung zugeordnet ist. Der erste Körper ist dabei als Gelenkkugel ausgebildet und der zweite Körper als tonnen- bzw. zylinderförmiges Teil.

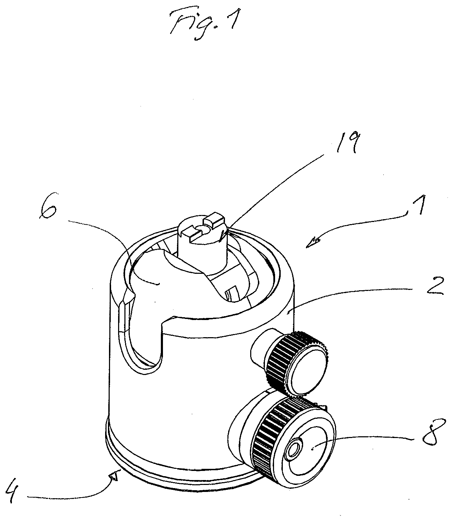

Dabei ist die Gelenkkugel innerhalb der Tonne angeordnet und gegenüber dieser um eine durchgehende Welle schwenkbar (vergleiche Figur 1).

Diese Konstruktion und der Aufbau der Teile sind komplex und aufwendig herzustellen sowie zu montieren. Dazu kommt, dass der Bewegungs- bzw. Einstellungsweg durch die Tonnenform des ersten Körpers beingeschränkt ist.

Aufgabe der Erfindung ist es demgegenüber, einen Stativkopf bereitzustellen, der gegenüber der zuvor genannten EP 0 349 948 A1 größere Verstellmöglichkeiten aufweist, sowie einfacher herzustellen und zu montieren ist.

Diese Aufgabe wird durch den in Anspruch 1 wiedergegebenen Stativkopf gelöst.

Dadurch, dass der ebenensymmetrischen Körper eine hohle und zweiteilige Gelenkkugel ist, deren Hohlraum einen Einbauraum und eine Führung für ein Schwenkteil ausbildet, ist der Umfang des Verstellwegs aufgrund der Kugelform größer als bei der bekannten Tonnenform. Zudem kann der Hohlraum platzsparend als Einbauraum verwendet werden, wodurch der gesamte Stativkopf kleiner und leicht ausfällt. Zusätzlich ist die Herstellung der Gelenkkugel selber durch die Zweiteilung vereinfacht die Montage insgesamt einfacher. Bisher wurden solche Gelenkkugeln aus dem Vollen aufwendig gefräst. Mittels der Erfindung können nun Gussteile verwendet werden, die lediglich nachbearbeitet werden müssen. Zudem erlaubt diese Ausgestaltung eine vereinfachte Montage, beispielsweise im Vergleich zur EP 0 349 948 A1, bei der die Montage komplett innerhalb des Gehäuses nach und nach stattfinden muss. Die erschwert nicht nur die Erstmontage, sondern auch die Reparatur.

Mit zweitteiliger Gelenkkugel ist vorliegend gemeint, dass zwei Kugelhalbschalen vorliegen.

Wenn die Gelenkkugel eine Öffnung aufweist, durch die das Schwenkteil nach Außen hindurchgreift, kann das Schwenkteil zur Verbindung mit dem optischen Gerät verwendet werden und gleichzeitig den Umfang der Verschwenkung der Gelenkkugel vergrößern bzw. ergänzen, insbesondere wenn die Schwenkachse des Schwenkteils näher zu der Öffnung in dem Gehäuse angeordnet ist, als die Schwenkachse der Gelenkkugel.

In einer bevorzugten Ausführungsform weist das Schwenkteil einen geschlitzten Ring auf.

Vorzugsweise ist der geschlitzte Ring in der Führung angeordnet, so dass das Schwenkteil über den Ring geführt wird.

Wenn der geschlitzte Ring, insbesondere der Schlitz, von einer zweiten Feststelleinrichtung durchgriffen wird, um das in der Gelenkkugel bewegliche Schwenkteil gegenüber der Gelenkkugel festzulegen, ergibt sich ein kompakter und einfacher Aufbau.

Die erste Feststelleinrichtung kann jeweils mindestens zwei mit jeweils einer Schrägfläche versehene Organe aufweisen, wobei die Schrägflächen aufeinanderliegend und quer zueinander verschiebbar angeordnet sind, um das eine Organ zur Erzielung der Klemmwirkung gegen die Gelenkkugel zu verschieben, wenn eine Stelleinrichtung, die mit dem anderen Organ im Eingriff steht, das andere Organ zum erstgenannten Organ quer verschiebt. Somit ergibt sich eine sichere und zugleich einfache Feststellung.

Die zweite Feststelleinrichtung kann analog zwei über eine Stelleinrichtung zueinander im Abstand verstellbare Organe zur Erzielung einer Klemmwirkung auf das Schwenkteil aufweisen.

Weitere Merkmale und Vorteile der Erfindung ergeben sich aus der nachfolgenden Beschreibung eines Ausführungsbeispiels anhand der Zeichnung. Es zeigen:
- Fig. 1: eine perspektivische Ansicht eines erfindungsgemäßen Stativkopfes;

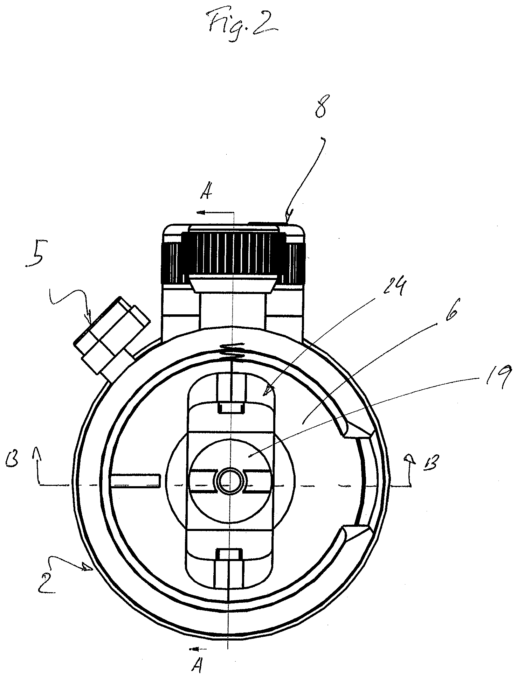

- Fig. 2: eine Draufsicht auf den Stativkopf aus Figur 1;

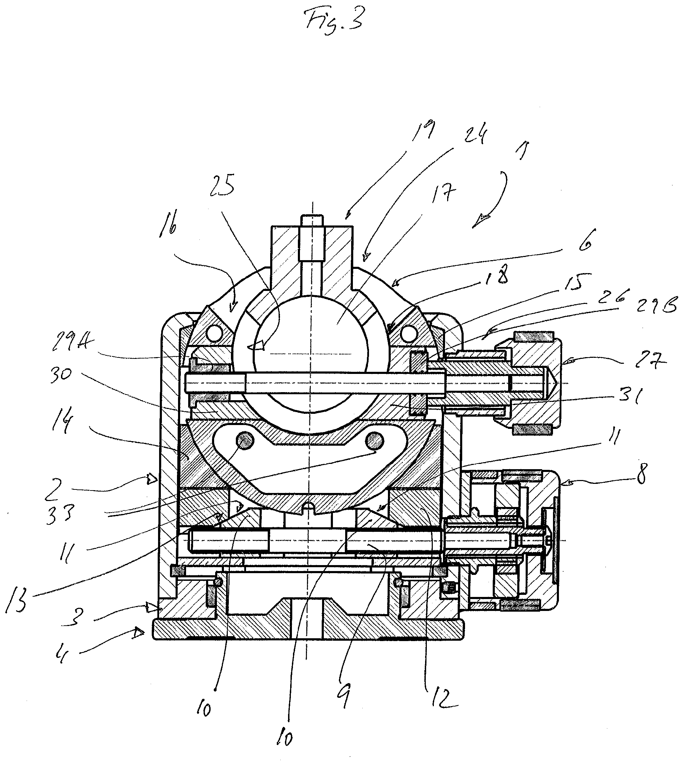

- Fig. 3: einen Längsschnitt durch den Stativkopf aus Figur 2 entlang der Linie A-A;

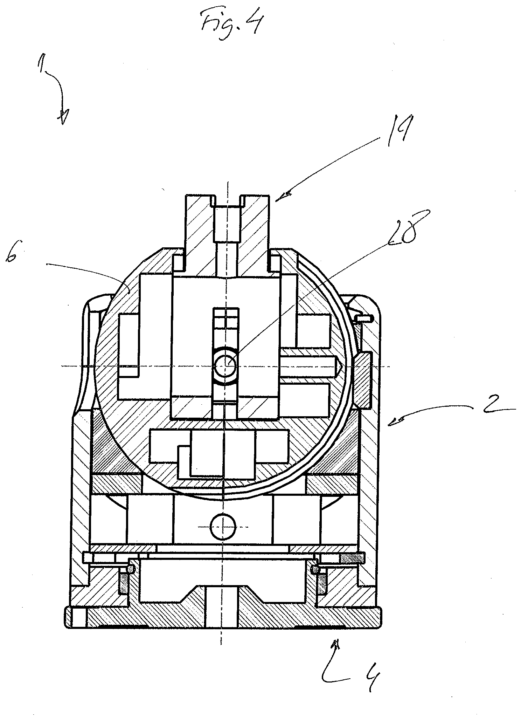

- Fig. 4: einen Längsschnitt durch den Stativkopf aus Figur 2 entlang der Linie B-B und

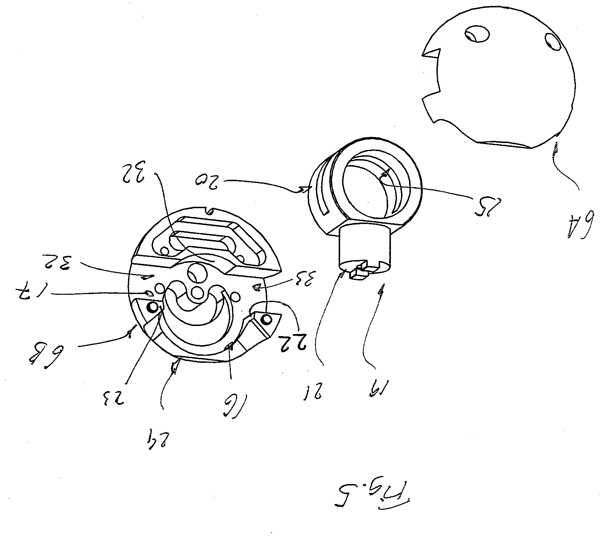

- Fig. 5: eine perspektivische Explosionsansicht der Gelenkkugel und des Schwenkteils aus Figur 1.

In den Figuren ist ein als Ganzes mit 1 bezeichneter Stativkopf für eine Kamera gezeigt.

Der Stativkopf umfasst ein zylindrisches Gehäuse 2, das über ein Gleitlager 3 auf einem Panoramadrehteller 4 gelagert ist.

In dem Drehteller 4 ist eine Gewindebohrung zur Befestigung am einem Stativ vorgesehen.

Der Panoramadrehteller 4 lässt ich einen Stellknopf 5 arretieren bzw. lösen.

In dem Gehäuse 2 ist ferner eine schwenkbare Gelenkkugel 6 vorgesehen, die über eine Feststelleinrichtung 7 gegen das Gehäuse 2 zur Fixierung klemmbar ist. Die Feststelleinrichtung 7 wird über eine Drehknopf 8 betätigt, der außen am Gehäuseumfang angeordnet ist.

Die Feststelleinrichtung 7 weist eine über den Drehknopf 8 betätigte Gewindespindel 9 auf, auf der zwei Gewindeblöcke 10 angeordnet sind, die jeweils eine nach Außen gerichtete Schrägfläche 11 aufweisen. Auf den Schrägflächen 11 ruht ein ebenfalls mit entsprechend ausgerichteter Schrägfläche 13 ausgestalteter Ring 12, der wiederum auf einen darüber liegenden Lagerring 14 einwirkt, auf dem die Gelenkkugel 6 gleitend ruht.

Durch Verdrehen der Spindel 9 werden die Gewindeblöcke 10 relativ zu einander auf der Spindel verschoben, so dass Ihre Schrägflächen 11 mit der Schrägfläche 13 der Rings 12 wechselwirkt, um diesen anzuheben oder abzusenken, wodurch der Lagerring 14 je nach Bewegung die Gelenkkugel 6 gegen einen weiteren fixen Lagerring 15 oberhalb der Gelenkkugel 6, um die Gelenkkugel 6 zu arretieren bzw. zur Verschwenkung freizugeben.

Die Gelenkkugel 6 ist hohl und zweiteilig (6A, 6B), wobei deren Hohlraum 16 einen Einbauraum 17 und eine Führung 18 für ein Schwenkteil 19 ausbildet, an dem die Kamera befestigt wird. Die zwei Teile (6A, 6B) sind nach Art der Kugelhalbschalen ausgebildet.

Die zwei Teile 6A, 6B sind im Wesentlichen identisch, aber spiegelverkehrt ausgestaltet und werden mittels einer Verschraubung 33 mit einander verbunden.

Das Schwenkteil 19 umfasst einen geschlitzten Ring 20 und ein daran befestigtes zylindrisches Anschlussteil 21 zur Verbindung mit der Kamera.

Der Ring 20 liegt schwenkbar in der aus einer gekrümmten, teilzylinderförmigen Aussparung 32 und zwei Nasen 22 und 23 gebildeten Führung 18.

Zwischen den beiden Nasen 22, 23 weist die Gelenkkugel 6 eine Öffnung 24 auf, durch die das Schwenkteil bzw. Anschlussteil 21 nach Außen hindurchgreift.

Der Schlitz 25 des geschlitzten Rings 20 wird von einer zweiten Feststelleinrichtung 26 durchgriffen, um das in der Gelenkkugel 6 bewegliche Schwenkteil 19 gegenüber der Gelenkkugel 6 festzulegen.

Die Feststelleinrichtung 26 weist eine über einen Drehknopf 27 betätigte Gewindespindel 28 auf, die den Schlitz 25 durchgreift und auf der zwei Gewindeblöcke 29A, B angeordnet sind, die jeweils auf einen Lagerblock 30, 31 einwirken. Die Lagerblöcke 30, 31 sind in entsprechenden Aussparungen 32, 33 der Gelenkkugel 6 aufgenommen.

Durch Verdrehen der Spindel 28 werden die Gewindeblöcke 29A, B relativ zu einander auf der Spindel verschoben, so dass sie die Lagerblöcke 30, 31 gegen den Ring 20 pressen und somit fixieren bzw. entfernen und freigeben.

Die Gewindespindel 28 liegt dabei genau in der Schwenkachse S der Gelenkkugel 6, d.h. sie wird um die Gewindespindel 28 herum verschwenkt, in eine Richtung quer zur Verschwenkrichtung des Schwenkteils 19.

## Patentansprüche

1. Stativkopf zur Aufnahme eines optischen Gerätes mit einem zylinderförmigen Gehäuse (8), das an einem Ende eine Anschlusseinrichtung für ein Stativ aufweist, und mit einem ebenensymmetrischen Körper, der im Gehäuse (8) schwenkbar angeordnet ist, sowie mit einer Feststelleinrichtung (7), um den ebenensymmetrischen Körper festzuklemmen, **dadurch gekennzeichnet, dass** der ebenensymmetrischen Körper eine hohle und zweiteilige Gelenkkugel (6) ist, deren Hohlraum (16) einen Einbauraum (17) und eine Führung (18) für ein Schwenkteil (19) ausbildet.

2. Stativkopf nach Anspruch 1, **dadurch gekennzeichnet, dass** die Gelenkkugel (6) eine Öffnung (24) aufweist, durch die das Schwenkteil (19) nach Außen hindurchgreift.

3. Stativkopf nach Anspruch 1 oder 2, **dadurch gekennzeichnet, dass** das Schwenkteil (19) einen geschlitzten Ring (20) aufweist.

4. Stativkopf nach Anspruch 3, **dadurch gekennzeichnet, dass** der geschlitzte Ring (20) in der Führung (18) angeordnet ist.

5. Stativkopf nach Anspruch 3 oder 4, **dadurch gekennzeichnet, dass** der geschlitzte Ring (20) von einer zweiten Feststelleinrichtung (26) durchgriffen wird, um das in der Gelenkkugel (6) bewegliche Schwenkteil (19) gegenüber der Gelenkkugel (6) festzulegen.

6. Stativkopf nach einem der vorhergehenden Ansprüche, **dadurch gekennzeichnet, dass** das Schwenkteil (19) einen Anschlussabschnitt aufweist.

7. Stativkopf nach einem der vorhergehenden Ansprüche, **dadurch gekennzeichnet, dass** die erste Feststelleinrichtung (7) jeweils mindestens zwei mit jeweils einer Schrägfläche (11,13) versehene Organe aufweist, wobei die Schrägflächen (11,13) aufeinanderliegend und quer zueinander verschiebbar angeordnet sind, um das eine Organ zur Erzielung der Klemmwirkung gegen die Gelenkkugel (6) zu verschieben, wenn eine Stelleinrichtung, die mit dem anderen Organ im Eingriff steht, das andere Organ zum erstgenannten Organ quer verschiebt.

8. Stativkopf nach einem der vorhergehenden Ansprüche, **dadurch gekennzeichnet, dass** die zweite Feststelleinrichtung (26) zwei über eine Stelleinrichtung zueinander im Abstand verstellbare Organe zur Erzielung einer Klemmwirkung auf das Schwenkteil (19) aufweist.

## Claims

1. Tripod head for receiving an optical device, comprising a cylindrical housing (8) which has a connection device for a tripod at one end, and comprising a plane-symmetrical body which is arranged so as to be able to pivot in the housing (8), and comprising a locking device (7) for clamping the plane-symmetrical body, **characterised in that** the plane-symmetrical body is a hollow and two-part joint ball (6), of which the cavity (16) forms an installation space (17) and a guide (18) for a pivoting part (19).

2. Tripod head as claimed in claim 1, **characterised in that** the joint ball (6) has an opening (24), through which the pivoting part (19) engages outwardly.

3. Tripod head as claimed in claim 1 or 2, **characterised in that** the pivoting part (19) comprises a slotted ring (20).

4. Tripod head as claimed in claim 3, **characterised in that** the slotted ring (20) is arranged in the guide (18).

5. Tripod head as claimed in claim 3 or 4, **characterised in that** a second locking device (26) engages through the slotted ring (20) in order to fix the pivoting part (19), which is movable in the joint ball (6), with respect to the joint ball (6).

6. Tripod head as claimed in any one of the preceding claims, **characterised in that** the pivoting part (19) has a connection portion.

7. Tripod head as claimed in any one of the preceding claims, **characterised in that** the first locking device (7) has in each case at least two members which are each provided with an inclined surface (11, 13), wherein the inclined surfaces (11, 13) are arranged such that they lie one on top of the other and can be displaced transversely with respect to one another in order to displace one member against the joint ball (6) in order to achieve the clamping effect if an adjusting device which is in engagement with the other member displaces the other member transversely with respect to the first-mentioned member.

8. Tripod head as claimed in any one of the preceding claims, **characterised in that** the second locking device (26) has two members, which can be adjusted with respect to one another at a spaced interval by means of an adjusting device in order to achieve a clamping effect on the pivoting part (19).

## Revendications

1. Tête de support, destinée à recevoir un appareil optique, comportant un boîtier (8) cylindrique pourvu à une extrémité d'un moyen de raccordement destiné à un support, et un corps à symétrie plane qui est disposé de manière pivotante dans le boîtier (8), ainsi qu'un moyen de verrouillage (7) destiné à serrer le corps à symétrie plane, **caractérisée en ce que** le corps à symétrie plane est une rotule (6) creuse, en deux parties, dont la cavité (16) forme un espace de montage (17) et un guide (18) destiné à un élément pivotant (19).

2. Tête de support selon la revendication 1, **caractérisée en ce que** la rotule (6) comporte une ouverture (24) que l'élément pivotant (19) traverse vers l'extérieur.

3. Tête de support selon la revendication 1 ou 2, **caractérisée en ce que** l'élément pivotant (19) comporte une bague fendue (20).

4. Tête de support selon la revendication 3, **caractérisée en ce que** la bague fendue (20) est disposée dans le guide (18).

5. Tête de support selon la revendication 3 ou 4, **caractérisée en ce que** la bague fendue (20) est traversée par un deuxième moyen de verrouillage (26) pour immobiliser, par rapport à la rotule (6), l'élément pivotant (19) mobilisant la rotule (6).

6. Tête de support selon l'une des revendications précédentes, **caractérisée en ce que** l'élément pivotant (19) comporte une partie de raccordement.

7. Tête de support selon l'une des revendications précédentes, **caractérisée en ce que** le premier moyen de verrouillage (7) comprend au moins deux organes pourvus chacun d'une surface inclinée (11, 13), les surfaces inclinées (11, 13) étant disposées l'une sur l'autre et de manière coulissante transversalement l'une par rapport à l'autre pour faire coulisser l'un des organes pour effectuer une action de serrage contre la rotule (6) lorsqu'un moyen de commande, qui est engagé avec l'autre organe, fait coulisser transversalement l'autre élément par rapport audit premier organe.

8. Tête de support selon l'une des revendications précédentes, **caractérisée en ce que** le deuxième moyen de verrouillage (26) comprend deux organes déplaçables à distance l'un de l'autre par le biais d'un moyen de commande et destiné à effectuer une action de serrage sur l'élément pivotant (19).
